# EUROPEAN PATENT SPECIFICATION

(11) **EP 3 259 072 B1**
(45) Date of publication and mention of the grant of the patent: **01.12.2021**
(21) Application number: 16710252.4
(22) Date of filing: 19.02.2016
(51) Int. Cl.: B01L 9/00, G01N 35/10

(54) **BOTTLE COMPARTMENT FOR ANALYZER INSTRUMENT**
FLASCHENFACH FÜR ANALYSEINSTRUMENT
COMPARTIMENT À BOUTEILLE POUR INSTRUMENT ANALYSEUR

(30) Priority: 19.02.2015 FI 20155109
(43) Date of publication of application: 27.12.2017
(73) Proprietor: Thermo Fisher Scientific Oy, 01620 Vantaa (FI)
(72) Inventor: SAARAINEN, Ville, 02650 Espoo (FI); NUOTIO, Vesa, 02970 Espoo (FI); JUTILA, Ilari, 01300 Vantaa (FI)
(86) International application number: PCT/FI2016/050106
(87) International publication number: WO 2016/132020

(56) References cited:
- EP-A1- 2 746 736
- GB-A- 2 333 515
- US-A1- 2008 142 113

## Description

### Field of technology

The present invention relates to a bottle compartment of an analyzer instrument for consumable liquids used by the analyzer instrument.

### Technological background

Analyzer instruments use different kinds of liquids in their analyzing processes. The used liquids include different types of reagent liquids, such as organic solvents and mild acids, and washing liquids for example. The used liquids also set requirements for the materials used with the analyzer instruments, so that parts in contact with the liquids endure the continuous contact without dissolving anything into the liquids.

The liquids used in analyzer instruments are generally contained in bottles and inserted in the analyzer instrument into compartments reserved for the bottles. The insertion process typically requires removing the used liquid bottle, opening a new liquid bottle, and setting the new bottle in the analyzer instrument together with setting of the aspiration tubes for aspiration of the liquid from the bottle. This replacement and insertion process is often time consuming and messy with droplets of liquid splashing from the aspiration tubes removed from the used liquid bottle and/or the new bottle when it is set at its place, which may create a hazardous chemical problem. Further, replacement processes may also allow for possible contaminants to enter the analyzer system.

In one known solution for this problem the bottle compartment may be closed using a vertically slidable hatch, wherein movement of the hatch is combined with insertion and removal of the aspiration tube. In this embodiment the hatch is opened by sliding the hatch vertically upwards, which simultaneously moves the aspiration tube vertically upwards and out from the liquid bottle located in the bottle compartment. And when a new liquid bottle is inserted in the bottle compartment, the closing of the hatch, which takes place by sliding the hatch vertically downwards, also moves the aspiration tube vertically inside the new bottle. This type of solution is used in MiSeq desktop sequencer by Illumina, Inc. However, this solution creates new problems, for example in that it requires significantly more space for the vertical movement, and the raised aspiration tube can drop liquid droplets in the bottle compartment when the bottle is removed underneath.

Similarly the system disclosed in EP 2746736 A1 for managing bulk liquids and solids describes aspiration of liquids by means of a vertical operation of the aspiration tube. In the instrument of US 2008/0142113 A1 liquids are aspirated from below the liquid containers because long upper needles possesses safety concerns and are complex to operate. Upper needles are short and are mainly used to provide replacement air into the containers.

A further source of analysis errors and incorrect results may result from improper liquids used in the analyzing process. This compromises the patient safety due to incorrect analyzing results.

### Summary of the invention

Both FDA (US Food and Drug Administration) and MDD/IVD standard ISO 13485 require that patient results generated by *in vitro* diagnostic (IVD) instruments must be traceable back to the original patient samples and to all analytically critical components of the analyzer systems including liquid consumables and disposables used in the analyzing processes.

In the context of the present invention a microbiology laboratory has several rooms or laboratories for different kinds of sample types. These rooms are also categorized based on biosafety levels (BSL) of the biological agents handled to BSL-1, BSL-2, BSL-3, and BSL-4. Many hazardous microbes, such as my-cobacteria for example, are processed in BSL-3 level laboratories and non-hazardous microbes are processed in BSL-1 level laboratories. Samples from these laboratory rooms are transferred to a separate analyzing room for analysis, which analyzing room is equipped with suitable analyzer instruments and serve several different laboratory rooms.

Generally, the samples to be analyzed are prepared in a sample preparation station located at the BSL room or rooms. The sample preparation station comprises an instrument to facilitate movement of primary samples (e.g. bacterial colony) from original sample media (e.g. agar plate, blood culture bottle) to a sample vessel in an ergonomic manner which further reduces errors.

As an example, a primary sample in an agar plate is taken to the sample preparation station and identification data of the primary sample, which is stored in a barcode, radio frequency identification (RFID) tag or other indicia, is read to the sample preparation station with a suitable reader. Once confirmation of the data input is received, for example by a visual or audio signal, a specimen sample is taken from the primary sample with a sampling device, and the primary sample is returned to its storage. Next a sample vessel is taken, and its identification data is read to the sample preparation station with a suitable reader as was done with the primary sample. Then the sample in the sampling tool is inserted in the sample vessel, and the sample is transferred to the vessel for example by detaching the end of the sampling tool containing the sample inside the sample vessel by twisting the sample tool, for example. The remaining part of the sampling tool is discarded and the lid or cap of the sample vessel is closed. The sample vessel together with the sample is placed in an empty position of a sample vessel rack located in the sample preparation station in a proper orientation. The sample preparation station detects the location of the newly inserted sample vessel in the sample vessel rack and connects identification data obtained from the primary sample and the new sample vessel to the location of the sample vessel in the sample vessel rack.

When the sample vessel rack contains the required number of sample vessels, the sample vessel rack is removed from the sample vessel preparation station. In one example, the removal action also activates a locking means in the sample vessel rack. The locking means prevent the removal of any of the sample vessels located in the rack when locking is activated. The sample vessel rack is then inserted into an analyzing instrument, which insertion action optionally deactivates the locking means in the sample vessel rack, allowing removal of the sample vessels from the sample vessel rack for analysis operations.

The obtained analysis results are connected to the identification data of the sample from the sample preparation station, so that each analysis result can be tracked to a single sample.

The present invention provides a bottle compartment for an analyzer instrument to be used in the above described process, the use of which greatly simplifies the liquid insertion process and guarantees proper setting of the liquid as well as decreases the possibility of contamination and splashes of the liquid during the insertion process. The present invention also requires the use of correct and properly prepared liquids, which enhances the accuracy and traceability of the analyzing results.

In the context of the present invention the features "bottle compartment" and related "bottle of liquid" or "liquid bottle" is to be interpreted at their widest meaning, and especially the "bottle" feature is to be interpreted to include any suitable liquid containers, such as bottles, cans, bags, jars, cartons and tins for example, made of any suitable materials, such as metal, glass or plastic materials for example.

The bottle compartment of the invention for an analyzer instrument comprises a frame with a location for a bottle of liquid used in the operation of the analyzer instrument, a tube for aspiration of liquid from a bottle at the location for a bottle by the analyzer instrument, a handle mechanism connected turnably to the frame, which handle mechanism in an open position allows access to the location for a bottle for insertion and removal of a bottle and in a closed position prevents access to the location for a bottle, and that the tube for aspiration of liquid is connected to the handle mechanism so that when the handle mechanism is turned to an open position the end of the tube is simultaneously moved from a bottle at the location for a bottle and when the handle mechanism is turned to a closed position the end of the tube is simultaneously moved into inside of a bottle at the location for a bottle. Thus the used bottle of liquid can be removed and a new bottle can be inserted simply by turning the handle mechanism to an open position, and once the handle is turned to a closed position after the change of bottle, liquid can be aspired by the analyzer instrument.

In an embodiment of the bottle compartment of the invention the tube for aspiration of liquid from a bottle passes through and is connected to a cap, which cap in a closed position of the handle mechanism is located on top of the opening of a bottle at the location for bottle. The cap prevents evaporation of the liquid in the bottle when the handle mechanism of the bottle compartment is in a closed position but preferably still allows air to enter to the bottle. The cap may be replaced with a cone member, which cone member in a closed position of the handle mechanism is located in the area of the opening of a bottle located in the location of the bottle, especially in cases where the opening of the bottle is covered with a sealing member. In this context the sealing member is a member used to cover the opening of the bottle, preferably hermetically. The sealing member may be a foil, a membrane, a sticker or a similar member made from a suitable material, for example. The sealing member is generally fixed to the bottle after the bottle is filled.

In an embodiment of the bottle compartment of the invention the handle mechanism comprises a cover, or is formed as a cover, covering the bottle at the location of the bottle substantially completely when the handle mechanism is in a closed position. This embodiment keeps the needle hidden from the user, which increases the safety of the user as well as increases the sterility of the needle.

In an embodiment of the bottle compartment of the invention the bottle located at the location for a bottle is in a slanted position. This slanted position of the bottle allows the liquid in the bottle to gather at one end of the bottom of the bottle, especially when the liquid volume in the bottle is low, so that the bottle can be emptied more thoroughly before replacement is required.

In an embodiment of the bottle compartment of the invention the bottle compartment comprises an intermediate storage container for liquid aspired from a bottle at the location for a bottle. This allows the analyzer instrument to store a quantity of liquid from the bottle to an intermediate storage so that the empty bottle may be changed without interrupting the operation of the analyzer instrument.

In an embodiment of the bottle compartment of the invention the bottle compartment comprises a RFID reader and writer for reading a RFID tag in a bottle located in the location for a bottle and for adding information to a RFID tag in a bottle located in the location for a bottle. With this embodiment the information about the liquid contained in the bottle with a RFID tag can be read directly to the analyzer system without any need for manual inputting, which enhances usability and result traceability. Further, with the RFID writing ability the analyzer system can tag used bottle as used, so that bottles refilled with non-validated liquids may not be used in order to improve quality of analyzer results and patient safety. This embodiment also prevents the use of bottles without RFID tags or bottles with incorrect RFID tags.

In an embodiment of the bottle compartment of the invention at least the end portion of the tube for aspiration of liquid from a bottle is made of metal, such as aluminum, stainless steel or acid-resistant steel, for example. This allows the end of the tube to pierce a sealing member of a bottle substantially without bending and thus the use of bottles with sealing members with the bottle compartment without the need to remove the sealing member before inserting the bottle to the bottle compartment. Other suitable materials for the end portion of the tube are for example glass, plastics (such as PTFE (Teflon^{®}), PEEK (polyester ketone) or PP (polypropylene)) or ceramics, for example. It is to be noted, however, that in a preferred embodiment the end portion is needle-like to facilitate smooth piercing of the sealing member, and a flexible plastic tube as such, for example, is not suitable as the tube must be able to pierce the foil without substantial bending. In an embodiment the tube is made of rigid, hard material coated with softer material.

In an embodiment of the bottle compartment of the invention the bottle compartment comprises a suitable locking mechanism, such as a solenoid lock, for locking the handle mechanism at its open position and/or a closed position. The locking at an open position prevents closing of the bottle compartment while an unauthorized liquid bottle is located in the bottle compartment and thus the contamination of the tubing. The locking mechanism preferably releases its locking only after the liquid bottle placed in the bottle compartment has been identified and the liquid contained therein certified, which also prevents closing of the bottle compartment when it is empty. The locking at a closed position allows prevention of the replacement of the bottle too early, and any undesired access to the bottle compartment during the use of the analyzer instrument, for example. The locking function can also be obtained by automating the opening and closing operations of the bottle compartment with suitable actuators, such as servo motors, for example.

In an embodiment of the bottle compartment of the invention the bottle compartment is a bottle compartment of an IVD (*in vitro* diagnostics) analyzer instrument.

The features defining a bottle compartment of the invention are more precisely presented in claim 1. Dependent claims present advantageous features and embodiments of the invention.

### Drawings

An exemplifying embodiment and its advantages are explained in greater detail below in the sense of an example and with reference to the accompanying figures, where
Figures 1A-1C show an embodiment of a bottle compartment of the invention,
Figure 2 shows an alternative embodiment of a bottle compartment of the invention, and
Figures 3A-3D show another alternative embodiment of a bottle compartment of the invention.

### Detailed description of the embodiment

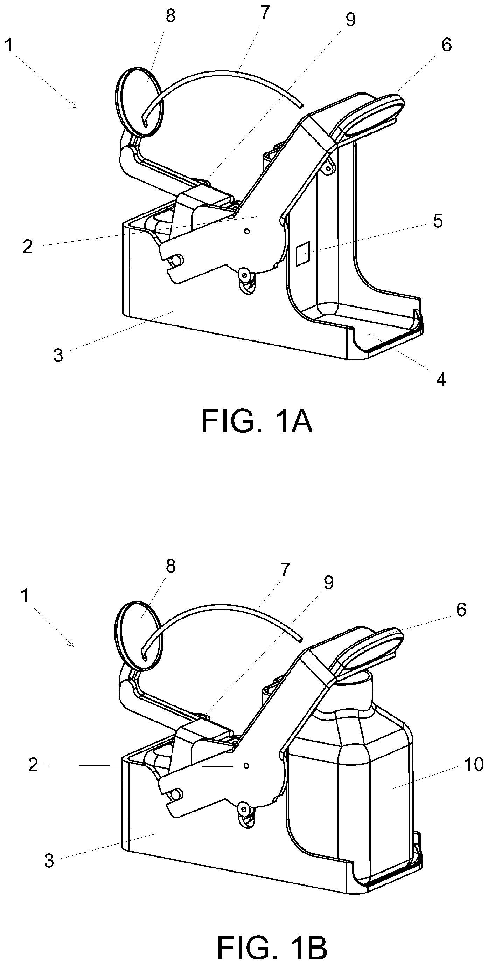

Figure 1A shows an embodiment of the bottle compartment 1 of the invention with a handle mechanism 2 in an open position.

The bottle compartment 1 comprises a frame 3 to which the handle mechanism 2 is movably connected. The frame 3 comprises a location 4 for a bottle of liquid used in the analyzing processes.

In the frame 3 of the bottle compartment 1 is located a RFID reader and writer 5 for reading information from a RFID tag located in a bottle of liquid to be inserted in the location 4, and for inputting information to the RFID tag of the bottle of liquid.

The handle mechanism 2 comprises a handle 6 for operating the handle mechanism, i.e. for turning the handle mechanism to an open or a closed position. The handle mechanism 2 also comprises a curved metal tube 7, which is connected to the opposite end of the handle mechanism with respect to the handle 6 and which tube is used to aspire liquid from a bottle of liquid located in the location 4 of the bottle compartment 1. On and around the tube 7 is located and connected a cap 8.

The bottle compartment 1 also comprises an intermediate storage container 9 connected to the frame 3.

In figure 1B a bottle 10 of liquid is inserted in the location 4 of the bottle compartment 1, while the handle mechanism 2 is in an open position. The bottle 10 of liquid is sealed with a sealing member sealing its opening in order to prevent splashes and spills of the liquid contained therein during the inserting process.

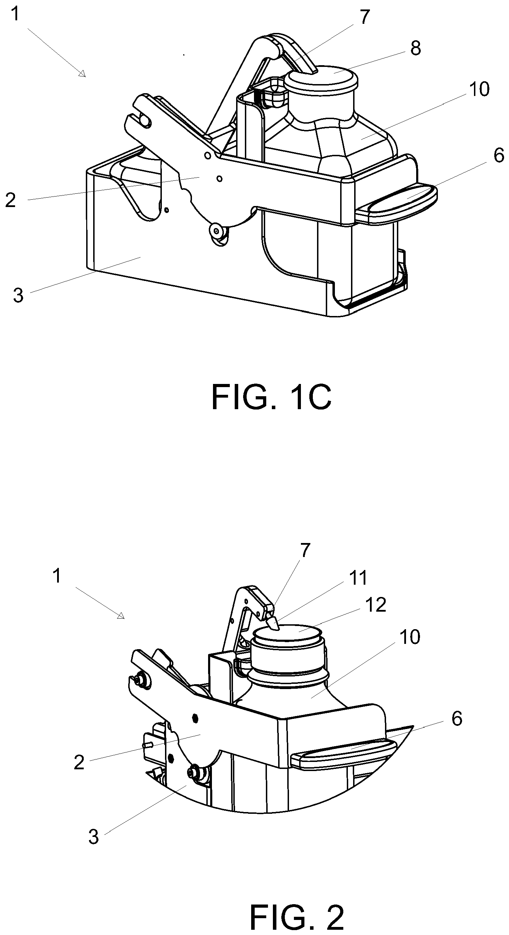

In figure 1C the handle mechanism 2 of the bottle compartment 1 is turned in a closed position by pressing the handle 6 downwards. During the turning of the handle mechanism 2 to a closed position, the aspiration tube 7 also turns towards the bottle 10 and the end of the tube pierces the sealing member of the bottle and sets itself inside the bottle so that liquid from the bottle can be aspired through it. The cap 8 connected to the tube 7 follows the movement of the tube and sets itself on top of the opening of the bottle 10 in order to prevent evaporation of the liquid inside the bottle but still allows air to enter to the bottle. In the position of figure 1C, the bottle compartment 1 is ready to provide the analyzer instrument with liquid from the bottle 10 for the required analyzing processes.

When the liquid is aspired from the newly inserted bottle 10 of liquid in the bottle compartment 1, it is first pumped to the intermediate storage 9, from where it is then used by the analyzer instrument. Thus when the bottle 10 is empty, the analyzer instrument informs of the need to change the bottle to the user of the analyzer instrument, but can still continue the analyzing processes without interruption with the use of the intermediate storage 9.

When a new bottle 10 of liquid is placed at its location 4 in the bottle compartment 1, the RFID reader and writer 5 reads information from a RFID tag located in the bottle to the analyzer system. This information may include type of liquid and amount of liquid contained in the bottle 10, for example. Thus the information is input directly to the analyzer system, so that no additional user actions, such as barcode reading with related tools, are required. Further, when the bottle 10 in the bottle compartment 1 is empty, the RFID reader and writer 5 adds this information to the RFID tag of the bottle, so that the same bottle may not be refilled with non-validated liquid. This enhances the patient safety, since the analyzer system only allows the use of validated liquids.

The embodiment of the bottle compartment 1 of the invention shown in figures and discussed above is preferably a bottle compartment of an IVD analyzer instrument, but may be used with other analyzer instruments that require use of liquids during the analyzing processes.

Figure 2 shows a modified embodiment of a bottle compartment 1 of the invention, where the cap 8 of the embodiment of figures 1A-1C is replaced with a cone member 11 fixed on and around the tube 7, so that when the handle 6 is in a closed position, as shown in figure 2, the cone member is located in the area of the opening of the bottle 10.

This embodiment of figure 2 is best used with bottles 10 comprising a sealing member 12, which sealing member covers and seals the opening of the bottle. The cone member 11 effectively covers the opening in the sealing member 12 formed by the end of the tube 7, when the handle 6 is moved from an open position to a closed position thus causing the tube to pierce the sealing member of the bottle 10 located in the bottle compartment 1. The cone member 11 still allows air to enter the bottle 10, so that no underpressure can be formed inside the bottle when liquid is aspired from it.

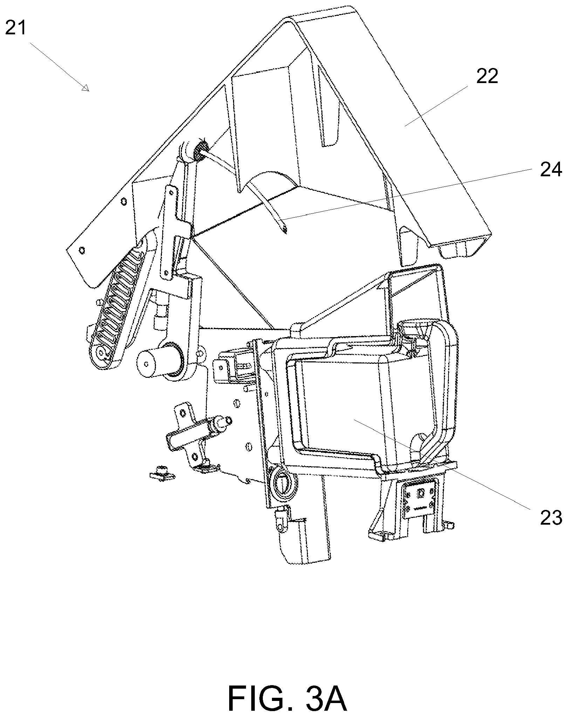

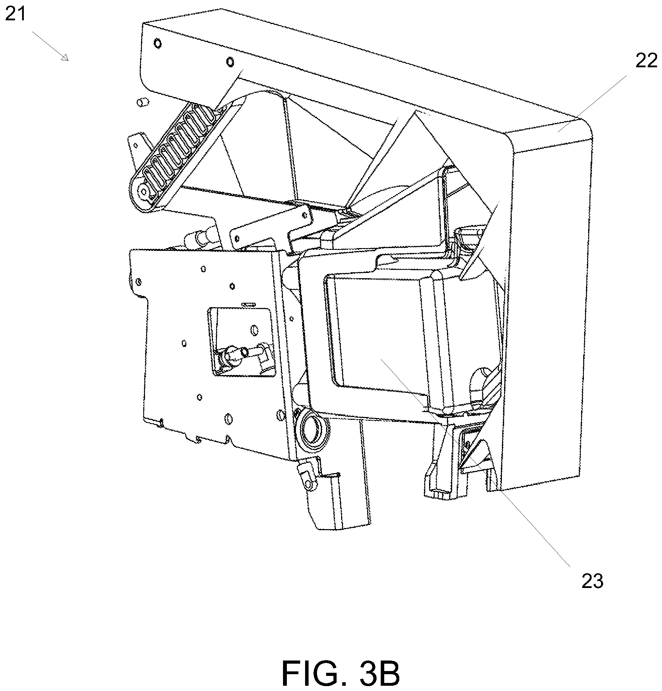

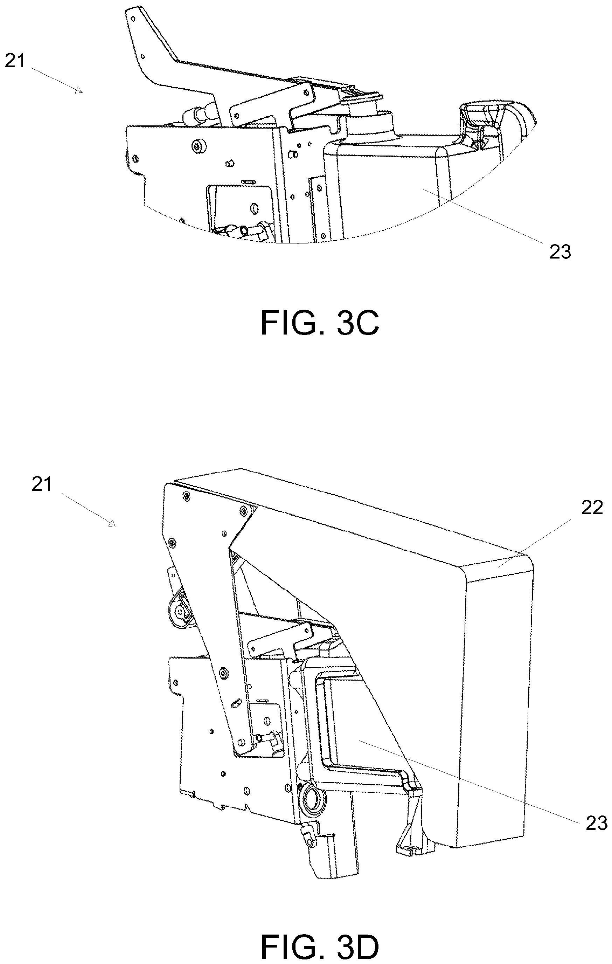

Figures 3A-3D show another alternative embodiment of the invention, where figure 3A shows the bottle compartment in an open position with the cover portion shown in cross-section, figure 3B shows the bottle compartment in a closed position with the cover portion shown in cross-section, figure 3C shows enlargement of the bottle compartment without a cover portion where the tube is inserted in the bottle, and figure 3D shows the bottle compartment in a closed position.

In the embodiment of figures 3A-3D the bottle compartment 21 comprises a handle mechanism 22, which comprises, or is formed as, a cover that substantially covers the access to the bottle 23 located in the location for a bottle in the bottle compartment when the handle mechanism is in a closed position.

Further, in this embodiment the tube 24 is also covered by the cover of the handle mechanism 22, which shields the tube from the user when the bottle 23 is changed, thus increasing the sterility of the tube and removing the user's access to the tube itself.

As can be best seen from figure 3B, the position of the bottle 23 located in the location of the bottle of the bottle compartment is in this embodiment slightly slanted towards the end of the location for the bottle. This allows the liquid to gather towards that side of the bottle, especially when there is only a small amount of the liquid left in the bottle, which helps in proper emptying of the bottle by the analyzer instrument. Further, with the slanted position of the bottle gravity helps to achieve the proper alignment for the bottle in the location for the bottle. The angle of the bottle in this slanted position is selected so, that it is large enough for the liquid to gather at one end of the bottom of the bottle, but small enough that it can be guaranteed that no liquid spills from the bottle even when the bottle is full. In practice this means that the angle is over 0 and less than 90 degrees, preferably from 5 to 45 degrees.

Figure 3C illustrates the position of tube 24 in the closed position of the handle mechanism 22, which is in this position completely inside the bottle 23.

Figure 3D illustrates the shielding of the bottle 23 in the bottle compartment when the handle mechanism 22 is in a closed position.

In relation to the embodiments discussed above it is to be noted, that the opening and closing of the handle mechanism can be implemented manually, or through the automatic control system of the analyzer instrument so that the automatic control system closes and/or opens the handle mechanism.

The specific exemplifying embodiment of the invention shown in figures and discussed above should not be construed as limiting. A person skilled in the art can amend and modify the embodiment in many evident ways within the scope of the attached claims. Thus the invention is not limited merely to the embodiments described above.

## Claims

1. A bottle compartment (1, 21) for an analyzer instrument, which bottle compartment comprises a frame (3) with a location (4) for a bottle (10, 23) of liquid, and a tube (7, 24) for aspiration of liquid from a bottle at the location for a bottle by the analyzer instrument, **characterized in that** the bottle compartment (1, 21) comprises a handle mechanism (2, 22) connected turnably to the frame (3), which handle mechanism in an open position allows access to the location (4) for insertion and removal of a bottle (10, 23) and in a closed position prevents access to the location, and that the tube (7, 24) for aspiration of liquid is connected to the handle mechanism so that when the handle mechanism is turned to the open position the end of the tube is simultaneously moved from the bottle at the location and when the handle mechanism is turned to the closed position the end of the tube is simultaneously moved inside the bottle at the location, and wherein in the closed position the tube (7, 24) reaches into the bottom of the bottle.

2. A bottle compartment (1, 21) according to claim 1, wherein the tube (7, 23) for aspiration of liquid passes through and is connected to a cap (8), which cap in the closed position of the handle mechanism (2) is located on top of an opening of the bottle (10, 23).

3. A bottle (21) compartment according to claim 1 or 2, wherein the handle mechanism (22) comprises a cover covering the bottle (23) at the location of the bottle completely when the handle mechanism is in the closed position.

4. A bottle (21) compartment according to any of claims 1-3, wherein the bottle (23) located at the location for bottle is in a slanted position.

5. A bottle compartment (1) according to any of claims 1-4, wherein the bottle compartment (1) comprises an intermediate storage container (9) for liquid aspired from the bottle (10).

6. A bottle compartment (1, 21) according to any of claims 1-5, wherein the bottle compartment (1, 21) comprises a RFID reader and writer (5) for reading a RFID tag in a bottle (10, 23) located in the location (4) and for adding information to the RFID tag in the bottle.

7. A bottle compartment (1, 21) according to any of claims 1-6, wherein at least the end portion of the tube (7, 24) for aspiration is made of metal, ceramics or plastic.

8. A bottle compartment (1, 21) according to any of claims 1-7, wherein the tube (7, 24) for aspiration has a needle-like end.

9. A bottle compartment (1, 21) according to any of claims 1-8, wherein the tube (7, 24) for aspiration has a curved, arc-like shape.

10. A bottle compartment (1, 21) according to any of claims 1-9, wherein the bottle compartment (1, 21) comprises a locking mechanism for locking the handle mechanism (2, 22) at the open position and/or the closed position.

11. A bottle compartment (1, 21) according to any of claims 1-10, wherein the bottle compartment (1, 21) is a bottle compartment of an IVD analyzer instrument.

## Patentansprüche

1. Flaschenfach (1, 21) für ein Analysegerät, wobei das Flaschenfach einen Rahmen (3) mit einer Stelle (4) für eine Flasche (10, 23) einer Flüssigkeit und ein Rohr (7, 24) für eine Einsaugung von Flüssigkeit aus einer Flasche an der Stelle für eine Flasche durch das Analysegerät umfasst, **dadurch gekennzeichnet, dass** das Flaschenfach (1, 21) einen Griffmechanismus (2, 22) umfasst, der mit dem Rahmen (3) drehbar verbunden ist, wobei der Griffmechanismus in einer offenen Position einen Zugang zu der Stelle (4) für einen Einsatz und eine Entfernung einer Flasche (10, 23) ermöglicht und in einer geschlossenen Position den Zugang zu der Stelle verhindert, und dass das Rohr (7, 24) für die Einsaugung von Flüssigkeit mit dem Griffmechanismus so verbunden ist, dass, wenn der Griffmechanismus in die offene Position gedreht wird, das Ende des Rohrs gleichzeitig an der Stelle aus der Flasche bewegt wird, und, wenn der Griffmechanismus in die geschlossene Position gedreht wird, das Ende des Rohrs gleichzeitig an der Stelle in die Flasche bewegt wird, und wobei das Rohr (7, 24) in der geschlossenen Position in den Boden der Flasche reicht.

2. Flaschenfach (1, 21) nach Anspruch 1, wobei das Rohr (7, 23) für die Einsaugung von Flüssigkeit durch eine Kappe (8) verläuft und mit dieser verbunden ist, wobei die Kappe in der geschlossenen Position des Griffmechanismus (2) auf einer Öffnung der Flasche (10, 23) gelegen ist.

3. Flaschenfach (21) nach Anspruch 1 oder 2, wobei der Griffmechanismus (22) eine Abdeckung umfasst, die die Flasche (23) an der Stelle der Flasche vollständig abdeckt, wenn sich der Griffmechanismus in der geschlossenen Position befindet.

4. Flaschenfach (21) nach einem der Ansprüche 1-3, wobei sich die Flasche (23), die an der Stelle für die Flasche gelegen ist, in einer schrägen Position befindet.

5. Flaschenfach (1) nach einem der Ansprüche 1-4, wobei das Flaschenfach (1) einen Zwischenlagerbehälter (9) für Flüssigkeit umfasst, die aus der Flasche (10) eingesaugt wird.

6. Flaschenfach (1, 21) nach einem der Ansprüche 1-5, wobei das Flaschenfach (1, 21) einen RFID-Leser und -Schreiber (5) zum Lesen eines RFID-Tags in einer Flasche (10, 23), die in der Stelle (4) gelegen ist, und zum Hinzufügen von Informationen zu dem RFID-Tag in der Flasche umfasst.

7. Flaschenfach (1, 21) nach einem der Ansprüche 1-6, wobei wenigstens der Endabschnitt des Rohrs (7, 24) für die Einsaugung aus Metall, Keramik oder Kunststoff hergestellt ist.

8. Flaschenfach (1, 21) nach einem der Ansprüche 1-7, wobei das Rohr (7, 24) für die Einsaugung ein nadelartiges Ende aufweist.

9. Flaschenfach (1, 21) nach einem der Ansprüche 1-8, wobei das Rohr (7, 24) für die Einsaugung eine gekrümmte, bogenartige Form aufweist.

10. Flaschenfach (1, 21) nach einem der Ansprüche 1-9, wobei das Flaschenfach (1, 21) einen Verriegelungsmechanismus zum Verriegeln des Griffmechanismus (2, 22) in der offenen Position und/oder der geschlossenen Position umfasst.

11. Flaschenfach (1, 21) nach einem der Ansprüche 1-10, wobei das Flaschenfach (1, 21) ein Flaschenfach eines IVD-Analysegeräts ist.

## Revendications

1. Compartiment de bouteille (1, 21) pour un instrument d'analyse, lequel compartiment de bouteille comprend un cadre (3) avec un emplacement (4) pour une bouteille (10, 23) de liquide, et un tube (7, 24) pour l'aspiration de liquide provenant d'une bouteille à l'emplacement d'une bouteille par l'instrument analyseur, **caractérisé en ce que** le compartiment de bouteille (1, 21) comprend un mécanisme de poignée (2, 22) relié de manière rotative au cadre (3), lequel mécanisme de poignée en position ouverte permet l'accès à l'emplacement (4) pour l'insertion et le retrait d'une bouteille (10, 23) et en position fermée empêche l'accès à l'emplacement, et que le tube (7, 24) pour l'aspiration de liquide est relié au mécanisme de poignée de sorte que lorsque le mécanisme de poignée est tourné vers la position ouverte, l'extrémité du tube est simultanément déplacée de la bouteille à l'emplacement et lorsque le mécanisme de poignée est tourné vers la position fermée, l'extrémité du tube est simultanément déplacée à l'intérieur de la bouteille à l'emplacement, et en position fermée, le tube (7, 24) atteint le fond de la bouteille.

2. Compartiment de bouteille (1, 21) selon la revendication 1, le tube (7, 23) pour l'aspiration de liquide passant à travers et étant relié à un capuchon (8), lequel capuchon dans la position fermée du mécanisme de poignée (2) est situé au-dessus d'une ouverture de la bouteille (10, 23).

3. Compartiment de bouteille (21) selon la revendication 1 ou 2, le mécanisme de poignée (22) comprenant un couvercle recouvrant complètement la bouteille (23) à l'emplacement de la bouteille lorsque le mécanisme de poignée est en position fermée.

4. Compartiment de bouteille (21) selon l'une quelconque des revendications 1 à 3, la bouteille (23) située à l'emplacement pour la bouteille étant dans une position inclinée.

5. Compartiment de bouteille (1) selon l'une quelconque des revendications 1 à 4, le compartiment de bouteille (1) comprenant un récipient de stockage intermédiaire (9) pour le liquide aspiré de la bouteille (10).

6. Compartiment de bouteille (1, 21) selon l'une quelconque des revendications 1 à 5, le compartiment de bouteille (1, 21) comprenant un lecteur et un graveur RFID (5) pour lire une étiquette RFID dans une bouteille (10, 23) située à l'emplacement (4) et pour ajouter des informations à l'étiquette RFID dans la bouteille.

7. Compartiment de bouteille (1, 21) selon l'une quelconque des revendications 1 à 6, au moins la partie d'extrémité du tube (7, 24) pour l'aspiration étant faite de métal, de céramique ou de plastique.

8. Compartiment de bouteille (1, 21) selon l'une quelconque des revendications 1 à 7, le tube (7, 24) pour l'aspiration ayant une extrémité en forme d'aiguille.

9. Compartiment de bouteille (1, 21) selon l'une quelconque des revendications 1 à 8, le tube (7, 24) pour l'aspiration ayant une forme incurvée en forme d'arc.

10. Compartiment de bouteille (1, 21) selon l'une quelconque des revendications 1 à 9, le compartiment de bouteille (1, 21) comprenant un mécanisme de verrouillage pour verrouiller le mécanisme de poignée (2, 22) en position ouverte et/ou en position fermée.

11. Compartiment de bouteille (1, 21) selon l'une quelconque des revendications 1 à 10, le compartiment de bouteille (1, 21) étant un compartiment de bouteille d'un instrument analyseur DIV.
